# EUROPÄISCHE PATENTSCHRIFT

(11) **EP 0 508 224 B1**
(45) Veröffentlichungstag und Bekanntmachung des Hinweises auf die Patenterteilung: **07.12.1994**
(21) Anmeldenummer: 92105185.0
(22) Anmeldetag: 26.03.1992
(51) Int. Cl.: G05G 9/04, B66F 9/20, B60K 28/04

(54) **Kombidrehgriff zur Zweihandbedienung zwangsgeführter Flurförderzeuge**
Combined pivotable grip for two-handed control of guided forklift trucks
Poignée rotative combinée pour la commande à deux mains d'un chariot élévateur guidé

(30) Priorität: 10.04.1991 DE 4111675
(43) Veröffentlichungstag der Anmeldung: 14.10.1992
(73) Patentinhaber: Wagner Fördertechnik GmbH & Co KG, 72760 Reutlingen (DE)
(72) Erfinder: Nedele, Helmut, Dipl.-Ing., W-7430 Metzingen (DE); Schnabel, Hartwig, Dipl.-Ing., W-7000 Stuttgart 1 (DE)
(74) Vertreter: Kasseckert, Rainer

(56) Entgegenhaltungen:
- EP-A- 0 175 061
- EP-A- 0 232 073
- DE-A- 3 925 872
- DE-B- 1 246 429

## Beschreibung

Die Erfindung betrifft einen Kombidrehgriff zur Zweihandbedienung zwangsgeführter Flurförderzeuge, insbesondere Gangstapler, mit zwei separaten Signalerzeugungsmitteln zur gleichzeitigen Einhand-Auslösung zweier Steuersignale.

Bekannte Bedienungselemente für Flurförderzeuge sind zumeist funktionsabhängig mehrgeteilt. Sobald bei derartigen Bedienungselementen mehr als eine Fahrzeugfunktion bedient werden muß, sind dazu beide Hände des Bedienungspersonals erforderlich. Dadurch wird ein gleichzeitiges Lenken des Fahrzeuges vereitelt, so daß die Bedienung der Fahrzeugfunktionen im Prinzip den Stand des Fahrzeuges voraussetzt.

Es sind auch bereits Bedienungselemente bekannt, bei denen eine Fahrzeugfunktion, beispielsweise ein Fahrbefehl, über einen Drehgriff stufenlos betätigt und eine andere Fahrzeugfunktion, beispielsweise das Heben und Senken des Lastträgers, durch Betätigung von Druck- bzw. Wippschaltern ausgelöst wird, die im Nahbereich außerhalb des Drehgriffes liegen. Dabei ergibt sich für den Bedienungsmann die Schwierigkeit, entweder den Drehgriff oder die Druck- bzw. Wippschalter zu bedienen, da letztere beim Verdrehen des Drehgriffes oft außerhalb des Wirkungsbereiches des dafür meist vorgesehenen Daumens zu liegen kommen und somit nicht gleichzeitig bedient werden können. Dadurch wird eine Überlagerung dieser Fahrzeugfunktionen bzw. daraus resultierender gleichzeitiger Bewegungsabläufe vereitelt. Abgesehen davon erfordern derartige Einrichtungen zumeist eine den einzelnen Schaltern entsprechende Anzahl von getrennten Steuerkreisen. Bedienungselemente, bei denen Druckschalter bzw. Druckknöpfe bereits direkt auf dem Drehgriff, z. B. stirnseitig derselben, angeordnet sind, schließen eine stufenlose Funktionsregelung aus.

Dies ist auch bei einem in dem DE-GM 78 22 523 offenbarten Pilotsteuergerät der Fall, das aus einem T-förmigen Stellhebel und einer Mehrzahl darauf angeordneter Druckknöpfe bzw. Wählhebel besteht, die umständlich zu bedienen sind und Fehlbedienungen nicht ausschließen.

Bei zwangsgeführten Flurförderzeugen, insbesondere schienengebundenen Gangstaplern, bestimmmen die Unfallverhütungsvorschriften, daß beim Verfahren im Regalgang beide Hände des Bedienungsmannes an Signalgeber gebunden sein müssen, damit diese während der Fahrt nicht über die Fahrzeugaußenkonturen hinaus in den Regalgang gestreckt werden können. Dabei ergibt sich zumeist die Schwierigkeit, daß durch die Zwangsquittierung der Zweihand-Steuerung nur eine Hand zur Auslösung von eigentlichen Steuerbefehlen für eine horizontale bzw. vertikale Fahrzeugbewegung verbleibt. Dies hat zur Folge, daß der Bedienungsmann beispielsweise mit der linken Hand die Zwangsquittierung zur Zweihand-Steuerung vornimmt, derweil mit der rechten Hand die horizontalen Fahrbewegungen des Flurförderzeuges ausgelöst werden. Zur Einleitung der vertikalen Hubbewegungen ist der Bedienungsmann gezwungen, zumindest mit der Steuerhand auf ein zweites, separates Steuerelement bzw. einen entsprechenden Signalgeber umzugreifen, der zumeist auf der anderen Seite des Bedientableaus plaziert ist, was dann zwangsweise einen Griffwechsel beider Hände voraussetzt, da dann mit der anderen Hand zwangsquittiert werden muß. Spielzeitoptimierende Diagonalfahrten bzw. -bewegungen sind bei derartigen Einrichtungen ausgeschlossen.

Bei einem aus der DE-OS 39 25 872 bekannten Bedienungselement für Flurförderzeuge ist ein Multifunktions-Drehgriff zur stufenlosen Betätigung einer Fahrschaltung auf seinem Umfang zusätzlich mit einem separaten Signalgeber zur stufenlosen und/oder feinabgestuften Betätigung der Hubschaltung ausgestattet, womit sich Fahrschaltung und/oder Hubschaltung gleichzeitig bzw. überlagert auslösen lassen. Dieses Bedienungselement weist wohl für freifahrende Flurförderzeuge große Vorteile auf, ist jedoch aufgrund der fehlenden Zwangsquittierung zur Zweihand-Bedienung für zwangsgeführte Gangstapler ungeeignet.

Der Erfindung liegt die Aufgabe zugrunde, mit geringem Aufwand an Mitteln und Kosten einen betriebssicheren und insbesondere ergonomischen Kombidrehgriff für zwangsgeführte Flurförderzeuge, insbesondere für Gangstapler, zu schaffen, der trotz zwangsweiser Quittierung des durch Unfallverhütungsvorschriften vorgeschriebenen Zweihand-Befehls eine gleichzeitige Auslösung von Fahrzeugsteuerbefehlen zur horizontalen und/oder vertikalen Bewegung ermöglicht, ohne das Erfordernis, die Hand bzw. die Hände zu irgendeinem Zeitpunkt vom Kombidrehgriff lösen und auf andere Signalgeber umgreifen zu müssen.

Diese Aufgabe wird bei einem Kombidrehgriff der eingangs definierten Art erfindungsgemäß dadurch gelöst, daß der Kombidrehgriff mit dem freihängenden Ende eines anderseits gehäusefest fixierten Zweigelenk-Drehschalters drehgekoppelt ist, der um ein erstes und/oder zweites Gelenk verdrehbar sowie gegen Verdrehung federbelastet vorgespannt ist und daß die Verdrehungen detektierende erste Signalerzeugungsmittel zur zwangsweisen Quittierung des Zweihand-Steuersignals sowie zweite Signalerzeugungsmittel zur Auslösung zumindest eines Fahrzeugsteuersignales vorgesehen sind. Die Integration des bislang separaten Signalgebers zur Zwangsquittierung mit der zweiten Hand direkt in den Kombidrehgriff zusätzlich zu einem in diesem vorhandenen Signalerzeugungsmittel zur Auslösung eines Fahrzeugsteuerbefehles ermöglicht durch sicheres und zeitsparendes Bedienen ohne lästiges und zeitraubendes Umgreifen der Hände auf verschiedene Signalgeber eine Spielzeitoptimierung des Flurförderzeuges bei gleichzeitiger Einhaltung der Unfallverhütungsvorschriften und Ausschlusses jeglicher Gefahr für den Bedienungsmann, der sich dadurch intensiver auf die Ein- und Auslagerungsvorgänge konzentrieren kann.

In Weiterbildung des Erfindungsgedankens sind an einem Bedientableau gleichzeitig, vorzugsweise beidseitig, zwei Kombidrehgriffe angeordnet, wobei ein Kombidrehgriff zur Auslösung eines Fahrschaltungssignales und der andere zur Auslösung eines Hubschaltungssignales ausgebildet ist und daß jeder Kombidrehgriff gleichzeitig als gegenseitiges (wechselseitiges) Zwangsquittierungs-Organ für den anderen vorgesehen ist. Diese Anordnung dient neben dem Personenschutz auch einem insbesondere wirtschaftlichen Einsatz des Flurförderzeuges in Folge der Möglichkeit, Horizontal- und Vertikalbewegungen zeitgleich überlagert auszuführen.

Um verschleißbedingten Störungen und Ausfällen vorzubeugen, ist in vorteilhafter Ausgestaltung der Erfindung am Zweigelenk-Drehschalter zumindest ein digitales, Signale lieferndes Signalerzeugungsmittel kontaktloser Bauart, vorzugsweise ein auf magnetostriktiver Basis arbeitender Hall-Generator, vorgesehen.

Eine andere bevorzugte Ausführungsform der Erfindung zeichnet sich dadurch aus, daß ein Koppelglied des Zweigelenk-Drehschalters in den Gelenken zweier Gelenkschuhe gelagert ist, von denen ein hinterer Gelenkschuh gehäusefest fixiert ist, wobei in endseitigen Kugelpfannen des Koppelgliedes und der Gelenkschuhe sich jeweils gegenüberliegende und gegenseitig verfederte Federbolzen zur automatischen Rückstellung des Zweigelenk-Drehschalters nach dessen Verdrehung angeordnet sind. Dieser mechanisch einfache Aufbau zeichnet sich durch geringe Herstellungskosten, hohe Funktionalität und geringen Wartungsbedarf aus.

Als besonders vorteilhaft hat es sich erwiesen, daß am Koppelglied eine Platine befestigt ist, und daß die ersten Signalerzeugungsmittel zur Quittierung des Zweihand-Steuersignals sich am hinteren Gelenkschuh und an der Platine gegenüberstehend und die zweiten Signalerzeugungsmittel zur Auslösung eines Fahrzeugsteuersignales (Fahrschaltung bzw. Hubschaltung) sich am vorderen Gelenkschuh und an der Platine gegenüberstehend angeordnet sind, wobei der Kombidrehgriff auf der der Platine abgewandten Seite am vorderen Gelenkschuh fixiert ist. Durch diese klare bauliche Abgrenzung zwischen Mechanik können alle zur Signalaufbereitung und -erzeugung erforderlichen elektronischen Bauelemente, beispielsweise Auswerteschaltungen in gedruckter Form, IC's oder Mikrochips auf der Platine angeordnet und bei Auftreten eines Störfalles leicht kontrolliert bzw. ausgetauscht werden.

Gemäß einer bevorzugten Variante der Erfindung ist das Koppelglied mit der Platine und einem ersten Teilelement durch eine vertikale Auslenkbewegung des Drehgriffes um eine Drehachse relativ zum hinteren, stationären Gelenkschuh mit dem zweiten Teilelement der ersten Signalerzeugungsmittel bewegbar und der zweite, freihängende Gelenkschuh mit einem ersten Teilelement durch Verdrehen des Kombidrehgriffes um eine Drehachse relativ zur Platine mit dem zweiten Teilelement der zweiten Signalerzeugungsmittel bewegbar, was einer einfachen und absolut fehlerfreien Handhabung des Kombidrehgriffes zugute kommt.

Weitere vorteilhafte Ausgestaltungen der Erfindung sind in den Ansprüchen sowie in der nachfolgenden Beschreibung wiedergegeben.

Eine Ausführungsform der Erfindung ist exemplarisch in der Zeichnung anhand mehrerer Figuren dargestellt und nachfolgend beschrieben. Es zeigt:
- **Fig. 1**: eine Draufsicht auf einen erfindungsgemäßen Kombidrehgriff,
- **Fig. 2**: eine teilgeschnittene Stirnansicht gemäß der Schnittlinie B-B von Fig. 1,
- **Fig. 3**: eine Seitenansicht von Fig. 1,
- **Fig. 4**: eine teilgeschnittene Seitenansicht gemäß der Schnittlinie A-A von Fig. 1.

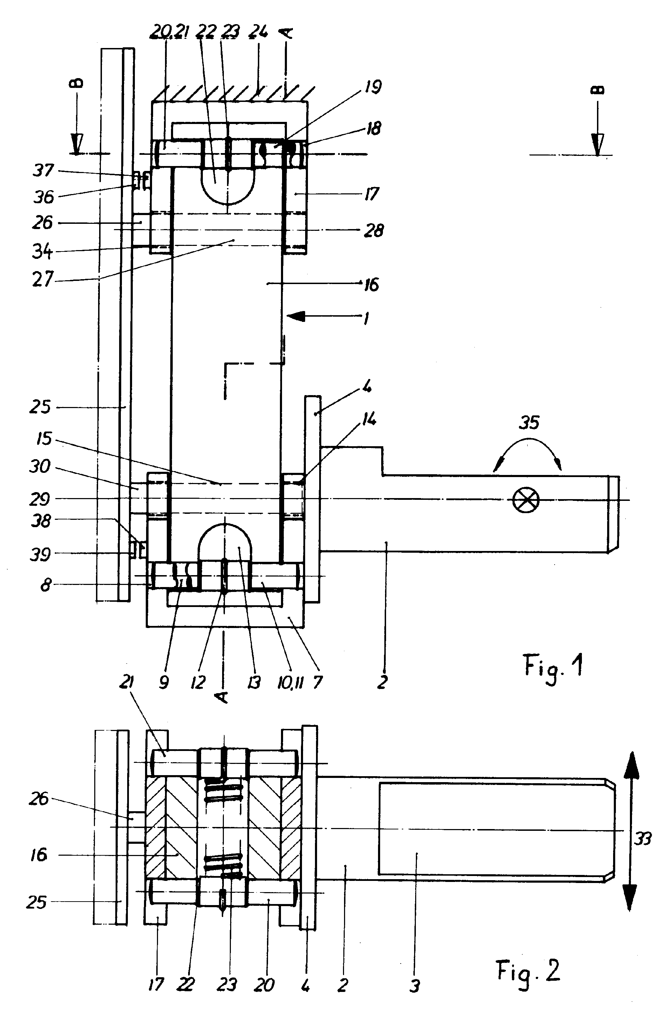

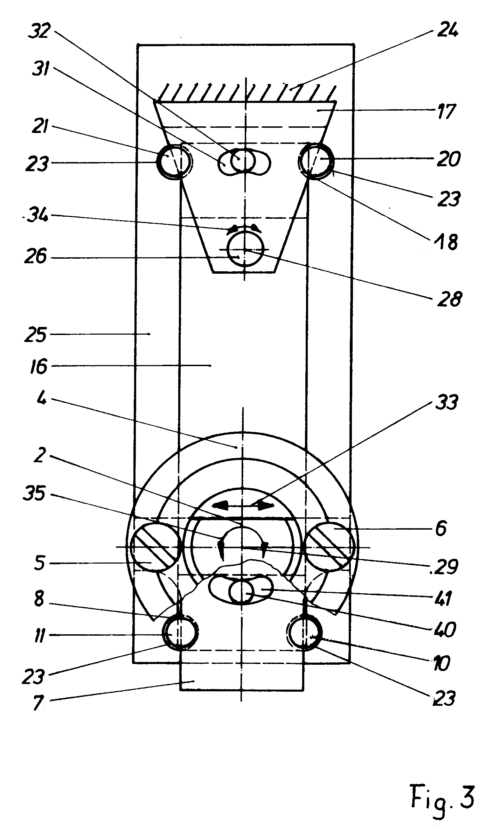

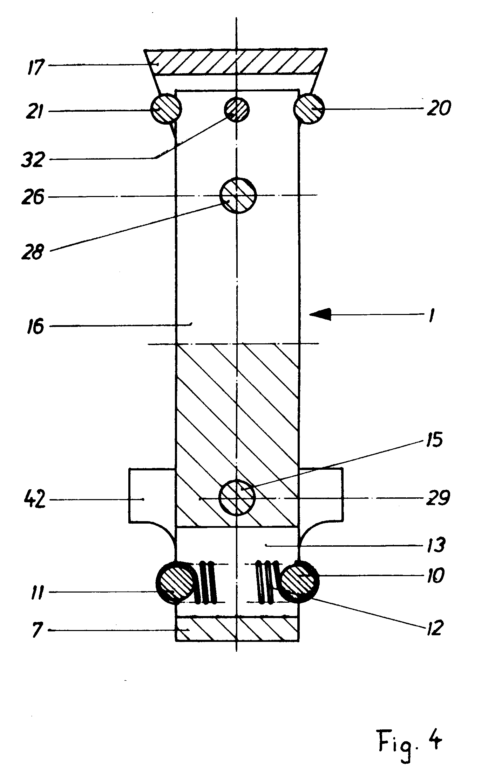

Wie in Fig. 1 dargestellt, ist ein stationärer U-förmiger Gelenkschuh 17 - im weiteren als hinterer Gelenkschuh 17 bezeichnet - an seiner Stirnseite gehäusefest an einem angedeuteten Bedientableau 24 eines Flurförderzeuges, vorzugsweise eines zwangsgeführten Gangstaplers, befestigt. Gemäß den Fig. 3 und 4 weist der Gelenkschuh 17 seitlich eine trapezförmige Querschnittsform auf und ist mittig seiner beiden Seitenwangen mit Durchgangsbohrungen 34 versehen. In diesen Durchgangsbohrungen 34 ist ein durchgehendes erstes Gelenk 27 - im weiteren als Gelenkbolzen bezeichnet - beweglich angeordnet, auf dem innerhalb der Seitenwangen des Gelenkschuhes 17 ein längliches Koppelglied 16 befestigt ist. Das Koppelglied 16 ist endseitig seiner Unter- und Oberseite mit durchgehenden, kreisbogenförmigen Gelenkpfannen 19 versehen, wie in den Fig. 1 und 3 ersichtlich. Axial fluchtend zu den Gelenkpfannen 19 des Koppelgliedes 16 sind in beiden Seitenwangen des Gelenkschuhes 17 ebenfalls kreisbogenförmige Aussparungen 18 eingelassen. In den Aussparungen 18 sowie den Gelenkpfannen 19 sind sich gegenüberliegende Federbolzen 20, 21 eingelegt, die in einer Aussparung 22 des Koppelgliedes 16 mittels einer Zugfeder 23 gegenseitig verfedert sind und letzteres mit dem Gelenkschuh 17 federnd verbinden.

Das andere, freihängende Ende des Koppelgliedes 16 ist, wie bereits zuvor beschrieben, in gleicher Weise um ein Gelenk 15 - im weiteren als Gelenkbolzen bezeichnet - in einem zweiten Gelenkschuh 7 gelagert und ebenfalls mittels zweier in kreisbogenförmigen Aussparungen 8 sowie Gelenkpfannen 9 angeordneten Federbolzen 10, 11 sowie einer in einer endseitigen Aussparung 13 des Koppelgliedes 16 eingelassenen Zugfeder 12 gegenüber dem Gelenkschuh 7 verfedert. Der vordere Gelenkschuh 7 weist einen rechteckigen Querschnitt auf, der endseitig in zwei Ausladungen 42 übergeht. An diesen Ausladungen 42 ist mittels eines Flansches 4 anhand zweier Befestigungsschrauben 5 und 6 ein Kombidrehgriff 2 angeschraubt, der zwecks besserer Handhabung mit einer Abflachung 3 versehen ist (Fig. 3 und 4).

Die beiden Gelenkbolzen 15 und 27 ragen auf der dem Kombidrehgriff 2 abgewandten Seite über die Seitenwangen der Gelenkschuhe 7 und 17 hinaus und dienen als Träger 30 und 26 für eine Platine 25, die vorzugsweise angeschraubt ist.

An beiden Enden der Platine sind, den beiden Gelenkschuhen 17, 7 zugewandt, erste Teilelemente 36 und 39 erster und zweiter Signalerzeugungsmitteln 36, 37 sowie 38, 39 und befestigt. Diesen ersten Teilelementen 36 und 39 stehen zweite Teilelemente 37 und 38 der Signalerzeugungsmittel 36, 37 sowie 38, 39 gegenüber, die an den der Platine 25 zugewandten Seitenwangen beider Gelenkschuhe 17, 7 angeordnet sind. Die Signalerzeugungsmittel 36 bis 39 können kontaktierender (Potentiometer) oder kontaktloser Bauart sein; vorzugsweise arbeiten sie berührungslos und verschleißfrei.

Im Ausführungsbeispiel der Figuren 1-4 ist das sich am stationären hinteren Gelenkschuh 17 befindliche zweite Teilelement 37 der Signalerzeugungsmittel 36, 37 als Dauermagnet ausgebildet, derweil als korrespondierendes erstes Teilelement 36 an der Platine 25 ein Hall-Generator Verwendung findet. Im Bereich des vorderen Gelenkschuhes 7 verhält es sich ebenso: dort stellt das an der Platine 25 befestigte zweite Teilelement 39 einen Hall-Generator dar, derweil das gegenüberstehende Teilelement 38 als Dauermagnet ausgebildet ist. Mit dem ersten Signalerzeugungsmittel 36, 37 wird ausschließlich das Zweihand-Steuersignal quittiert, derweil das zweite Signalerzeugungsmittel 38, 39 ausschließlich zur Erzeugung von Fahrzeugsteuersignalen, wie z.B. Fahrschaltungs- oder Hubschaltungssignalen dient, wobei die Zuordnung auch wahlweise umgekehrt sein kann.

Alternativ können die Signalerzeugungsmittel 36 bis 39 photoelektrischer Bauart sein, vorzugsweise digitale Steuersignale erzeugende Gabellichtschranken. Dabei sind die Lichtsender und -empfänger jeweils an der Platine 25 und die korrespondierenden Inkrementalgeber, vorzugsweise Strichscheiben, an den beiden Gelenkschuhen 7, 17 angeordnet.

Die Wirkungsweise des erfindungsgemäßen Kombidrehgriffs 2 wird nachfolgend näher erläutert.

Durch die in den Fig. 1 und 3 mit dem Bewegungspfeil 35 dargestellte Drehbewegung des Kombidrehgriffes 2 wird der vordere Gelenkschuh 7 um die Drehachse 29 des Gelenkbolzens 15, je nach Drehrichtung, rechts- oder linkssinnig verdreht. Durch die feste Verbindung mit dem Koppelglied 16 bleibt die Platine 25 mit dem Hall-Generator 39 in ihrer Absolutlage unverändert, derweil sich die Position des am vorderen Gelenkschuh 7 angeordneten Dauermagnet 38 relativ zum Hall-Generator 39 verändert. Die dabei in Abhängigkeit von der Größe des Drehwinkels auftretenden Magnetfeldänderungen werden vom Dauermagneten 38 detektiert und über bekannte und deshalb nicht näher beschriebene sowie dargestellte Signalaufbereitungsmittel Stellsignale für die Fahrschaltung oder Hubschaltung erzeugt.

Da der Gelenkschuh 7 durch die beiden gegeneinander verfederten Federbolzen 10 und 11 gegenüber dem Koppelglied 16 gegen Verdrehung federbelastet vorgespannt ist, wird bei einer Verdrehung des Gelenkschuhes 7 durch dessen kreisbogenförmige Aussparungen 8 zwangsweise einer der Federbolzen 10 bzw. 11 aus seiner kreisbogenförmigen Gelenkpfanne 19 ausgehoben und entgegen der auf ihn einwirkenden Rückstellkraft der Zugfeder 12 in Drehrichtung des Kombidrehgriffes 2 mitgenommen. Da der gegenüberliegende Federbolzen 11 bzw. 10 seine Absolutlage in der kreisbogenförmigen Gelenkpfanne 9 des stationären Koppelgliedes 16 unverändert beibehält, wird die Zugfeder 12 mit zunehmendem Drehwinkel des Kombidrehgriffes 2 stärker gespannt und dadurch deren Rückstellkraft erhöht. Sobald der Kombidrehgriff 2 wieder freigelassen wird, zieht die entgegengerichtete Kraft der Rückstellfeder 12 den ausgelenkten Federbolzen 10 bzw. 11 mitsamt dem Gelenkschuh 7 wieder in seine neutrale Ausgangslage bzw. Nullposition zurück.

Bei einer in Fig. 2 angedeuteten vertikalen Auslenkbewegung des Kombidrehgriffes 2 nach oben oder unten entsprechend der Pfeilrichtung 33 wird das freihängende vordere Ende des Koppelgliedes 16 im stationären Gelenkschuh 17 um die Drehachse 28 des Gelenkbolzens 27 ausgelenkt. Im Prinzip handelt es sich auch hierbei um eine reine Drehbewegung des gesamten Zweigelenk-Drehschalters 1 um einen verlängerten Radius. Da die Platine 25 über die Träger 26 und 30 der Gelenkbolzen 15 und 27 mit dem Koppelglied 16 fest verbunden ist, folgt sie der vertikalen Auslenkbewegung des Kombidrehgriffes 2 und wird am Griffende zusammen mit diesem nach unten oder oben abgesenkt bzw. angehoben. Dadurch wird das andere Ende der Platine 25 zusammen mit dem Koppelglied 16 um die Drehachse 28 in entgegengesetzter Richtung ausgelenkt, wodurch sich die Lage des Hall-Generators 36 in bezug auf den Dauermagneten 37 ändert, der seine Absolutlage durch die Befestigung am stationären Gelenkschuh 17 beibehält. Wie bereits zuvor erwähnt, wird dabei die Magnetfeldänderung detektiert und daraus ein Signal zur zwangsweisen Quittierung der Zweihand-Steuerung abgeleitet.

Um die Verdrehung des vorderen Gelenkschuhes 7 im Koppelglied 16 sowie die Verdrehung des Koppelgliedes 16 im stationären Gelenkschuh 17 zu begrenzen, ist gemäß Darstellung in Fig. 3 zumindest in einer Seitenwange beider Gelenkschuhe 7 und 17 jeweils eine kreisbogenförmige Führungsnut 41 und 31 eingelassen. Vorzugsweise weisen beide Seitenwangen der Gelenkschuhe 7 und 17 derartige Führungsnuten 41 und 31 auf. In diese Führungsnuten 41 und 31 greifen Führungsstifte 40 und 32 ein, die auf einer gedachten Linie mittig der Federbolzen 10 und 11 bzw. 20 und 21 im Koppelglied 16 befestigt und in den Führungsnuten 41 und 31 geführt sind. In Abhängigkeit von der Länge der kreisbogenförmigen Führungen 41 und 31 läßt sich das Maß des Drehwinkels zur Verdrehung des vorderen Gelenkschuhes 7 um die Drehachse 29 im Koppelglied 16 sowie die Auslenkung des Koppelgliedes 16 um die Drehachse 28 im stationären Gelenkschuh 17 begrenzen, da in den jeweiligen Bewegungsendstellungen die Führungsstifte 42 und 43 an die Enden der Führungsnuten 41 und 31 anschlagen.

In der Regel sind an dem Bedientableau 24 des Flurförderzeuges zwei Kombidrehgriffe 2 angeordnet, vorzugsweise beidseitig desselben. Dem Bedienungsmann eröffnet sich dadurch die besondere Möglichkeit, durch Drehbewegung eines der beiden Kombidrehgriffe 2 entsprechend den Bewegungspfeilen 35 entweder Fahrschaltungs- oder Hubschaltungssignale zu erzeugen, derweil er durch gleichzeitige vertikale Auslenkbewegung des anderen Kombidrehgriffes 2 - auch in gegenseitiger Wechselwirkung zueinander - entsprechend den Bewegungspfeilen 33 die erforderliche Zwangsquittierung zur Zweihand-Steuerung vornehmen kann. Darüber hinaus kann bei Bedarf die Auslenkbewegung 33 der Drehbewegung 35 des Kombidrehgriffes 2 überlagert werden bzw. vice versa, um dadurch gleichzeitig Fahrschaltungs- und Hubschaltungssignale zur Diagonalfahrt des Flurförderzeuges zu erzeugen. Dies setzt eine gleichzeitige Dreh- und Auslenkbewegung zumindest eines der beiden Kombidrehgriffe 2 voraus, damit einerseits zwangsquittiert und andererseits eines der beiden Fahrzeugsteuersignale (entweder Fahrschaltungs- oder Hubschaltungssignal) erzeugt werden kann, derweil der andere Kombidrehgriff 2 nur verdreht werden muß, um das zweite Fahrzeugsteuersignal (entweder Hubschaltungs- oder Fahrschaltungssignal) zu erzeugen.

Da der Bedienungsmann somit mit jeder Hand zwangsquittieren und gleichzeitig zumindest ein Fahrzeugsteuersignal erzeugen kann, entfällt das lästige und zeitraubende Umgreifen auf verschiedene Signalgeber, das einer wirtschaftlich optimalen Spielweise des Flurförderzeuges (Gangstapler) entgegensteht und den Bedienungsmann aufgrund Veränderung seiner Blickrichtung außerdem vom eigentlichen Beschickungsvorgang ablenkt.

Alternativ kann zur Vereinfachung der Handhabung des Kombidrehgriffes 2 zwecks Erleichterung der Fahrzeugsteuerung das Steuersignal zur Zwangsquittierung auch auf die Drehbewegung gemäß der Bewegungspfeile 35 des Kombidrehgriffes 2 gelegt und parallel gleichzeitig vom zweiten Signalerzeugungsmittel 38, 39 abgeleitet werden, beispielsweise in Form einer Schwellwertgebung.

Die Erfindung ist natürlich keinesfalls auf die in den Figuren dargestellte und in der Beschreibung niedergelegte Ausführungsform beschränkt. Es versteht sich von selbst, daß zahlreiche konstruktive sowie funktionelle Abwandlungen und Ergänzungen im Rahmen der Erfindung liegen, beispielsweise die Verwendung aller handelsüblichen digitalen oder analogen Signalerzeugungsmittel, die zu dem angestrebten Zweck der Auslösung von Fahrschaltungs- und/oder Hubschaltungssignalen Verwendung finden können, ebenso wie die Wahl anderer Federmittel zur automatischen Rückstellung des Zweigelenk-Drehschalters 1 oder die Anordnung von Rastpositionen zur Einhaltung bestimmter und vorwählbarer Dreh- bzw. Auslenkwinkel des Kombidrehgriffes 2 zwecks Erzeugung gezielter Fahrschaltungs- und/oder Hubschaltungssignale.

Selbstverständlich lassen sich die Grenzen der Erfindung auch so weit abstecken, daß die Anordnung zumindest eines zusätzlichen digitalen bzw. analogen Signalgebers am Kombidrehgriff 2 zur Steuerung eines weiteren Freiheitsgrades eines Lastträgers des Flurförderzeuges denkbar ist, beispielsweise zum Schwenken oder Drehen des Lastträgers um eine dritte Achse. Ein derartiger Signalgeber kann gemäß der Einrichtung der DE-OS 39 25 872 ausgebildet oder stirnseitig des Kombidrehgriffes 2 als Druck- oder Wippschalter angeordnet sein. Aus der Relativbewegung der ersten und zweiten Signalerzeugungsmittel 36, 37 bzw. 38, 39 zueinander zusätzlich zu den Digitalsignalen Analogsignale abzuleiten - beispielsweise zur Schwellwertbildung -versteht sich für den Durchschnittsfachmann ohne weitere Erwähnung ohnehin von selbst.

## Patentansprüche

1. Kombidrehgriff zur Zweihandbedienung zwangsgeführter Flurförderzeuge, insbesondere Gangstapler, mit zwei Signalerzeugungsmitteln zur gleichzeitigen Einhand-Auslösung zweier Steuersignale,
**dadurch gekennzeichnet**,
daß der Kombigriff (2) mit dem freihängenden Ende eines anderseits gehäusefest fixierten Zweigelenk-Drehschalters (1) drehgekoppelt ist, der um ein erstes und/oder zweites Gelenk (27 bzw. 15) verdrehbar sowie gegen Verdrehung federbelastet vorgespannt ist und daß die Verdrehungen detektierende erste Signalerzeugungsmittel (36, 37) zur Quittierung des Zweihand-Steuersignals sowie zweite Signalerzeugungsmittel (38, 39) zur Auslösung zumindest eines Fahrzeugsteuersignals vorgesehen sind.

2. Kombidrehgriff nach Anspruch 1,
**dadurch gekennzeichnet**,
daß an einem Bedientableau (24) gleichzeitig, vorzugsweise beidseitig, zwei Kombidrehgriffe (2) angeordnet sind, wobei ein Kombidrehgriff (2) zur Auslösung eines Fahrschaltungssignales und der andere zur Auslösung eines Hubschaltungssignales ausgebildet ist und daß jeder Kombidrehgriff (2) gleichzeitig als gegenseitiges (wechselseitiges) Zwangsquittierungs-Organ für den anderen vorgesehen ist.

3. Kombidrehgriff nach Anspruch 1 und/oder 2,
**dadurch gekennzeichnet**,
daß am Zweigelenk-Drehschalter (1) zumindest ein digitale Signale lieferndes Signalerzeugungsmittel (36, 37 oder 38, 39) kontaktloser Bauart, vorzugsweise ein auf magnetostriktiver Basis arbeitender Hall-Generator, vorgesehen ist.

4. Kombidrehgriff nach einem oder mehreren der Ansprüche 1 bis 3,
**dadurch gekennzeichnet**,
daß am Zweigelenk-Drehschalter (1) zumindest ein analoge Signale lieferndes Signalerzeugungsmittel (36, 37 oder 38, 39) kontaktierender Bauart, vorzugsweise ein Drehpotentiometer, vorgesehen ist.

5. Kombidrehgriff nach einem oder mehreren der Ansprüche 1 bis 3,
**dadurch gekennzeichnet,**
daß zumindest eines der Signalerzeugungsmittel (36, 37 oder 38, 39) als Gabellichtschranke ausgebildet ist.

6. Kombidrehgriff nach einem oder mehreren der vorangehenden Ansprüche,
**dadurch gekennzeichnet**,
daß ein Koppelglied (16) des Zweigelenk-Drehschalters (1) in den Gelenken (27, 15) zweier Gelenkschuhe (17, 7) gelagert ist, von denen einer (17) gehäusefest fixiert ist, wobei in endseitigen Gelenkpfannen (19, 9) des Koppelgliedes (16) und Aussparungen (18 bzw. 8) der Gelenkschuhe (17, 7) sich jeweils gegenüberliegende und gegenseitig verfederte Federbolzen (20, 21 bzw. 10, 11) zur automatischen Rückstellung des Zweigelenk-Drehschalters (1) nach dessen Verdrehung angeordnet sind.

7. Kombidrehgriff nach einem oder mehreren der vorangehenden Ansprüche,
**dadurch gekennzeichnet**,
daß am Koppelglied (16) eine Platine (25) befestigt ist, und daß die ersten Signalerzeugungsmittel (36, 37) zur Quittierung des Zweihand-Steuersignals sich am hinteren Gelenkschuh (17) und an der Platine (25) gegenüberstehend und die zweiten Signalerzeugungsmittel (38, 39) zur Auslösung eines Fahrzeugsteuersignales (Fahrschaltung bzw. Hubschaltung) sich am vorderen Gelenkschuh (7) und an der Platine (25) gegenüberstehend angeordnet sind, wobei der Kombidrehgriff (2) auf der der Platine (25) abgewandten Seite am vorderen Gelenkschuh (7) fixiert ist.

8. Kombidrehgriff nach Anspruch 1 und/oder 2,
**dadurch gekennzeichnet**,
daß das Koppelglied (16) mit der Platine (25) und einem ersten Teilelement (36) durch eine vertikale Auslenkbewegung des Drehgriffes (2) um eine Drehachse (28) relativ zum stationären Gelenkschuh (17) mit dem zweiten Teilelement (37) der ersten Signalerzeugungsmittel (36, 37) bewegbar ist und daß der freihängende Gelenkschuh (7) mit einem ersten Teilelement (38) durch Verdrehen des Kombidrehgriffes (2) um eine Drehachse (29) relativ zur Platine (25) mit dem zweiten Teilelement (39) der zweiten Signalerzeugungsmittel (38, 39) bewegbar ist.

9. Kombidrehgriff nach einem oder mehreren der vorangehenden Ansprüche,
**dadurch gekennzeichnet**,
daß zumindest in einer Seitenwange beider Gelenkschuhe (7, 17) die Drehbewegung des Kombidrehgriffes (2) begrenzende, kreissegmentförmige Führungsnuten (41, 31) vorgesehen sind, die mit im Koppelglied (16) angeordneten Führungsbolzen (40, 32) anschlagsbezogen in Wirkverbindung stehen.

## Claims

1. Combination twist-grip for two-handed operation of positively guided industrial trucks, in particular aisle stackers, with two signal-generating means for simultaneous one-handed triggering of two control signals, characterised in that the combination twist-grip (2) is rotationally coupled with the freely suspended end of a double-jointed rotary switch (1) which is fixed firmly to a housing at the other end and which is rotatable about a first and/or second joint (27 and 15) and spring-loaded against rotation, and in that first signal-generating means (36, 37) detecting the rotations are provided for acknowledgement of the two-handed control signal and second signal-generating means (38, 39) are provided for triggering at least one vehicle control signal.

2. Combination twist-grip according to claim 1, characterised in that two combination twist-grips (2) are disposed simultaneously on a control panel (24), preferably on both sides, one combination twist-grip (2) being embodied for triggering a driving control signal and the other for triggering a lifting control signal, and in that each combination twist-grip (2) is provided simultaneously as a reciprocal (mutual) compulsory acknowledgement member for the other.

3. Combination twist-grip according to claim 1 and/or 2, characterised in that at least one signal-generating means (36, 37 or 38, 39) of contactless type supplying digital signals, preferably a Hall generator working on a magnetostrictive basis, is provided on the double-jointed rotary switch (1).

4. Combination twist-grip according to one or more of claims 1 to 3, characterised in that at least one signal-generating means (36, 37 or 38, 39) of contact type supplying analogue signals, preferably a rotary potentiometer, is provided on the double-jointed rotary switch (1).

5. Combination twist-grip according to one or more of claims 1 to 3, characterised in that at least one of the signal-generating means (36, 37 or 38, 39) is embodied as a divided photo-electric cell.

6. Combination twist-grip according to one or more of the preceding claims, characterised in that a coupling member (16) of the double-jointed rotary switch (1) is mounted in the joints (27, 15) of two joint shoes (17, 7), one (17) of which is fixed firmly to the housing, facing and reciprocally spring-loaded spring pins (20, 21 and 10, 11) being disposed in end joint cups (19, 9) of the coupling member (16) and recesses (18 and 8) of the joint shoes (17, 7) for automatic resetting of the double-jointed rotary switch (1) after its rotation.

7. Combination twist-grip according to one or more of the preceding claims, characterised in that a plate (25) is fixed to the coupling member (16), and in that the first signal-generating means (36, 37) for acknowledgement of the two-handed control signal are disposed on the rear joint shoe (17) and facing the plate (25), and the second signal-generating means (38, 39) for triggering a vehicle control signal (driving control or lifting control) are disposed on the front joint shoe (7) and facing the plate (2), the combination twist-grip (2) being fixed to the front joint shoe (7) on the side remote from the plate (25).

8. Combination twist-grip according to claim i and/or 2, characterised in that the coupling member (16) can be moved with the plate (25) and a first part element (36) by a vertical deflecting movement of the twist-grip (2) about an axis of rotation (28) relative to the stationary joint shoe (17) with the second part element (37) of the first signal-generating means (36, 37) and in that the freely suspended joint shoe (7) can be moved with a first part element (38) by rotation of the combination twist-grip (2) about an axis of rotation (29) relative to the plate (25) with the second part element (39) of the second signal-generating means (38, 39).

9. Combination twist-grip according to one or more of the preceding claims, characterised in that circle segment-shaped guide slots (41, 31) which limit the rotational movement of the combination twist-grip (2) and are in stop-related operative connection with guide pins (40, 32) disposed in the coupling member (16), are provided at least in one side piece of both joint shoes (7, 17).

## Revendications

1. Poignée rotative combinée pour le maniement à deux mains de chariots élévateurs guidés, en particulier de chariots de gerbage d'allée, avec deux moyens de production de signaux servant au déclenchement simultané à une main de deux signaux de commande, caractérisée en ce que cette poignée combinée (2) est couplée en rotation avec l'extrémité à suspension libre d'un interrupteur rotatif (1) à double articulation fixé par ailleurs au boîtier, que l'on peut faire tourner autour d'une première et/ou d'une deuxième articulation (27 ou 15) et qui est aussi précontraint, comprimé par ressort contre toute rotation et en ce que l'on prévoit des premiers moyens de production de signaux (36, 37), détectant des rotations, servant à confirmer le signal de commande à deux mains ainsi que des seconds moyens de production de signaux (38, 39) servant à déclencher au moins un signal de commande de véhicule.

2. Poignée rotative combinée selon la revendication 1, caractérisée en ce que l'on dispose sur un tableau de commande (24) en même temps, de préférence des deux côtés, deux poignées rotatives combinées (2), une poignée rotative combinée (2) étant constituée pour déclencher un signal de circuit de marche et l'autre pour déclencher un signal de circuit de levage et en ce que chaque poignée rotative combinée (2) est prévue en même temps comme organe opposé (alternatif) de confirmation obligatoire pour l'autre.

3. Poignée rotative combinée selon la revendication 1 et/ou 2, caractérisée en ce que l'on prévoit sur l'interrupteur rotatif à double articulation (1) au moins un moyen de production de signaux délivrant des signaux numériques (36, 37 ou 38, 39) du type sans contact, de préférence un générateur de Hall fonctionnant sur une base magnétostrictive.

4. Poignée rotative combinée selon une ou plusieurs des revendications 1 à 3, caractérisée en ce que l'on prévoit sur l'interrupteur rotatif à double articulation (1) au moins un moyen de production de signaux (36, 37 ou 38, 39), délivrant des signaux analogiques, du type sans contact, de préférence un potentiomètre rotatif.

5. Poignée rotative combinée selon une ou plusieurs des revendications 1 à 3, caractérisée en ce que l'on constitue au moins l'un des moyens de production de signaux (36, 37 ou 38, 39) sous la forme d'un barrage photoélectrique à fourche.

6. Poignée rotative combinée selon une ou plusieurs des revendications précédentes, caractérisée en ce que l'on monte un organe d'accouplement (16) de l'interrupteur rotatif à double articulation (1) dans les articulations (27, 15) de deux genouillères (17, 7), dont l'une est fixée, de façon solidaire, au boîtier, des axes à ressort (20, 21 ou 10, 11) faisant mutuellement ressort et se faisant vis-à-vis sont disposés dans des cavités articulaires (19, 9), situées aux extrémités, de l'organe d'accouplement (16) et des évidements (18 ou 8) de la genouillère (17, 7) pour avoir un retour automatique de l'interrupteur rotatif à double articulation (1) après sa rotation.

7. Poignée rotative combinée selon une ou plusieurs des revendications précédentes, caractérisée en ce que sur l'organe d'accouplement (16) est fixée une platine (25) et en ce que les premiers moyens de production de signaux (36, 17) servant à confirmer le signal de commande à deux mains sont disposés en se faisant vis-à-vis sur la genouillère arrière (17) et sur la platine (25) et les seconds moyens de production de signaux (38, 39) servant à déclencher un signal de commande de marche (circuit de marche ou circuit de levage) sont disposés en se faisant vis-à-vis sur la genouillère avant (7) et sur la platine (25) la poignée rotative combinée (2) étant fixée sur le côté situé à l'opposé de la platine (25) sur la genouillère avant (7).

8. Poignée rotative combinée selon la revendication 1 et/ou 2, caractérisée en ce que l'organe d'accouplement (16) est mobile avec la platine (25) et un premier élément partiel (36) grâce à un mouvement de déviation vertical de la poignée rotative (2) autour d'un axe de rotation (28) par rapport à la genouillère stationnaire (17) avec le deuxième élément partiel (37) des premiers moyens de production de signaux (36, 37) et en ce que la genouillère (7) à suspension libre est mobile avec un premier élément partiel (38) grâce à la rotation de la poignée rotative combinée (2) autour d'un axe de rotation (29) par rapport à la platine (25) avec le deuxième élément partiel (39) des seconds moyens de production de signaux (38, 39).

9. Poignée rotative combinée selon une ou plusieurs revendications précédentes, caractérisée en ce que l'on prévoit au moins dans une joue latérale des deux genouillères (7, 17) des rainures de guidage (41, 31) en forme d'arcs de cercle, limitant le mouvement de rotation de la poignée rotative combinée (2), rainures qui sont en liaison opérationnelle avec des axes de guidage (40, 32) disposés dans l'organe d'accouplement (16).
